# EUROPÄISCHE PATENTANMELDUNG

(11) **EP 0 969 245 A2**
(43) Veröffentlichungstag der Anmeldung: **05.01.2000**
(21) Anmeldenummer: 99111393.7
(22) Anmeldetag: 11.06.1999
(51) Int. Cl.: F21V 5/00

(54) **Scheinwerferanordnung für ein Kraftfahrzeug**

(30) Priorität: 01.07.1998 DE 19829344
(71) Anmelder: Volkswagen Aktiengesellschaft, 38436 Wolfsburg (DE)
(72) Erfinder: Werner, Michael, 38106 Braunschweig (DE)

(57) **Zusammenfassung**

Die Erfindung betrifft eine Scheinwerferanordnung für Kraftfahrzeuge mit mindestens zwei Leuchtmitteln für Fahr-, Abblend- und Standlicht, welche innerhalb eines Scheinwerfergehäuses angeordnet sind, wobei das Scheinwerfergehäuse eine Lichtaustrittsfläche ausweist, gemäß Oberbegriff des Patentanspruches 1. Um bei einer Scheinwerferanordnung dieser Art die Anzahl von Einzelteilen zu reduzieren und die einzelnen Leuchtmittel jedoch dennoch effektiv abzudecken ist erfindungsgemäß vorgeschlagen, daß die Lichtaustrittsfläche sektionsweise derart teildurchlässig beschichtet ist, daß dieselbe in Richtung von außen in das Scheinwerfergehäuse hinein optisch dicht und in umgekehrter Richtung lichtdurchlässig ist, und das hinter den besagten beschichteten Sektionen Leuchtmittel oder Teile davon beispielsweise für das Blinklicht angeordnet sind.

## Beschreibung

Die Erfindung betrifft eine Scheinwerferanordnung für Kraftfahrzeuge mit mindestens zwei Leuchtmittelanordnungen für Fahr- Abblend- und Standlicht, welche innerhalb eines Scheinwerfergehäuses angeordnet sind, wobei das Scheinwerfergehäuse eine Lichtaustrittsfläche aufweist, gemäß Oberbegriff des Patentanspruches 1.

Scheinwerferanordnungen im allgemeinen sind vielfach bekannt. Dabei enthalten Lampen- bzw. Scheinwerferanordnungen für Kraftfahrzeuge in der Regel mehrere Leuchtmittel, d.h. mehrere Lampen, beispielsweise eine für Standlicht und eine für Fahr/Abblendlicht.

Es ist eine ständige Aufgabe nicht nur die Unterbringung der besagten mehreren Lampen in ein für sich kompaktes Scheinwerfergehäuse zu integrieren, sondern darüber hinaus enthalten Scheinwerferanordnungen dieser Art noch weitere Komponenten. Hierzu gehören beispielsweise bei Scheinwerfern nach dem Projektionstyp, die zumeist verwendet werden, außerdem einen Reflektor sowie eine Linse und darüber hinaus Haltemittel zur Befestigung derselben.

Somit muß bei der Konstruktion derselben ständig darauf geachtet werden, zum einen die Komponenten platz- d.h. raumsparend einzubauen, jedoch so daß die Ausleuchtungsqualität der unterschiedlichen Beleuchtungsmodi nicht darunter leiden.

Dennoch müssen die einzelnen Komponenten so untergebracht werden, daß sie weder den eigentlichen zu erzeugenden Lichtkegel behindern, noch ein nachteiliges Design erzeugen.

Das Design, d.h. also die äußerliche Optik der Beleuchtungseinrichtung spielt auch in technischer Hinsicht eine wesentliche Rolle. So können beispielsweise ungeschickt angebrachte Reflexions-, Linsen-, oder auch Reflektorebenen dazu führen, daß das Licht entgegenkommender Fahrzeuge Reflexionen auf diesen besagten Teilen erzeugen, die dann die besagten entgegenkommenden Fahrzeugführer erheblich blenden können. Ein solcher Aspekt geht also weit über den Designaspekt hinaus und ist somit technischer, und in diesem Falle insbesondere sicherheitstechnischer Natur.

Die besagten Lampen oder Leuchtmittel oder auch andere Elemente der Scheinwerferanordnung werden optisch verdeckt untergebracht innerhalb eines Scheinwerfergehäuses, wozu vielfach separate Abdeckungen verwendet werden. Damit erhöht sich die Anzahl von Einzelteilen, was wiederum die Montage erschwert und den Scheinwerfer außerdem störanfällig macht.

Der Erfindung liegt somit die Aufgabe zugrunde zum einen die Anzahl von Einzelteilen zu reduzieren, und zum anderen die einzelnen Leuchtmittel bzw. Lampen dennoch effektiv abzudecken.

Die gestellte Aufgabe wird bei einer Scheinwerferanordnung der gattungsgemäßen Art erfindungsgemäß durch die kennzeichnenden Merkmale des Patentanspruches 1 gelöst. Weitere vorteilhafte Ausgestaltungen der Erfindung sind in den abhängigen Ansprüchen 2 bis 5 angegeben.

Kern der erfindungsgemäßen Lösung, welche die oben gestellte Aufgabe in erfindungsgemäßer Weise löst ist, daß die Lichtaustrittsfläche sektionsweise beschichtet ist, und zwar teildurchlässig. Diese teildurchlässige Beschichtung erfolgt dabei so, daß dieselbe in Richtung von außen in das Scheinwerfergehäuse hinein optisch dicht und in umgekehrter Richtung lichtdurchlässig ist. Darüber hinaus sind hinter den besagten beschichteten Sektionen Leuchtmittel oder Teile davon beispielsweise für das Standlicht angeordnet.

In weiterer vorteilhafter Ausgestaltung der Erfindung ist die sektionsweise Beschichtung aus einer außen als Verspiegelung wirkenden Beschichtung bestehend. Da die besagte Verspiegelung eine Beschichtung ist, welche sozusagen halbdurchlässig ist, bewirkt sie auch, daß die Blendwirkung auf andere Fahrzeuge erheblich reduziert ist.

Vorteilhaft ist weiterhin, daß die sektionsweise Beschichtung eine die Lichtaustrittsfläche innen oder außen aufgesputterte Beschichtung ist.

Weiterhin vorteilhaft ist, daß hinter den beschichteten Sektionen weitere Zusatzleuchten wie Blinklicht oder dergleichen verdeckt angeordnet sind bzw. angeordnet werden können. Die Zusatzleuchten oder das Standlicht können dabei in einem konturierten Rahmenelement der Scheinwerferanordnung bzw. der Abdeckung derselben befestigt sein, welche optisch von der besagten sektionsweisen Beschichtung verdeckt wird.

Insofern können durch diese sektionsweise Beschichtung auch weitergehende Leuchtmittel, wie Blinklicht und dergleichen untergebracht werden, so daß die gesamte Scheinwerferanordnung kompakt ist und dennoch alle optisch und gestalterisch störenden Elemente effektiv abgedeckt sind.

Die Erfindung ist in der Zeichnung dargestellt und nachfolgend näher beschrieben.

Es zeigt:
Figur 1: Scheinwerfer in Frontalansicht.
Figur 2: Scheinwerfer in Seitenansicht.

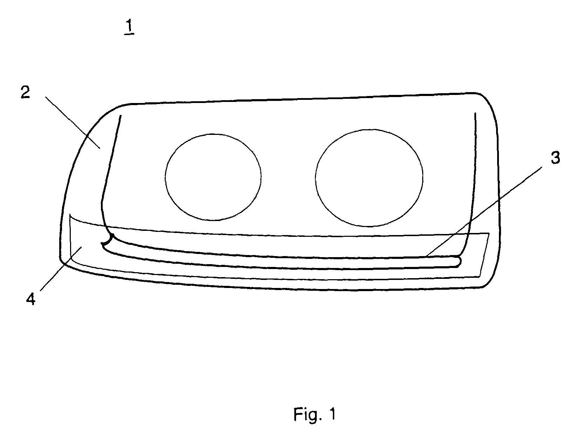

Figur 1 zeigt einen Scheinwerfer bzw. ein Scheinwerfergehäuse der üblichen Bauart.

Dieser bzw. dieses besteht aus einem Gehäuse 1 in welchem die einzelnen Komponenten angeordnet sind. Darüber hinaus sind hinter der Scheinwerferscheibe 2 des Scheinwerfergehäuses Abdeckelemente bzw. im speziellen ein Abdeckrahmen 3 angeordnet. Das Scheinwerferglas 2 entspricht somit der Lichtaustrittsfläche.

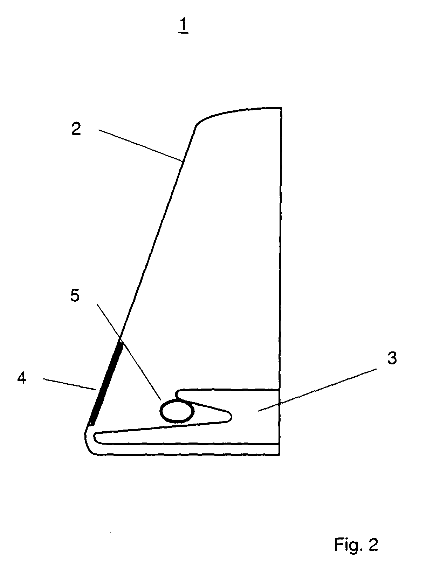

In erfindungsgemäßer Ausgestaltung kann beispielsweise das Standlicht innerhalb dieses Abdeckrahmens 3 angeordnet sein. Der Abdeckrahmen hat dabei eine nach außen offene sozusagen konkave Rille in welcher ein weiteres Leuchtmittel wie Blinklicht angeordnet ist. Weitergehendes wird hierzu noch aus Figur 2 ersichtlich.

Des weiteren enthält das Scheinwerfergehäuse 1 bzw. die vordere Fläche also die Scheinwerferscheibe 2 an der entsprechenden Stelle eine sektionsweise Beschichtung 4 die den Abdeckrahmen 3 und das darin integrierte Leuchtmittel verdeckt.

Die sektionsweise Beschichtung 4 kann dabei durch sogenanntes Besputtern erfolgen, indem fertigungstechnisch die Glaskörper, d.h. die Scheinwerferscheiben in einen entsprechenden Vakuumreaktor eingebracht werden und die Metallisierung durchs Sputtern aufgebracht wird. Der Sputtervorgang als solches wird bekanntermaßen dadurch ausgeführt, daß Argonionen auf ein metallisches Target hin beschleunigt werden und aus diesem besagten Target Metallatome herausschlagen, die sich dann in einer entsprechenden Verteilungsfunktion und einem entsprechenden Raumwinkelelement verteilen. Innerhalb dieses Raumwinkelelementes ist dann das besagte Glaselement angebracht, wobei hier noch eine entsprechende Maske zur genauen Definition der zu besputternden Sektion aufgelegt wird. Die Metallatome schlagen sich sodann auf den Glaselementen wieder. Bei der Vewendung solcher besputterter Glaselemente im Hinblick auf die oben genannte Erfindung ist nun darauf zu achten, bestimmte Sputterparameter einzustellen um definierte Schichtdicken aufzutragen. Dabei ist es nämlich von der Schichtdicke abhängig ob nun die metallisierte Sektion auch tatsächlich die in Patentanspruch 1 angegebene Eigenschaft hat. Grundsätzlich ist es dabei so, daß diese besagten Sputterparameter bekannt sind und der Sputtervorgang als solches im Hinblick auf die zu erstellenden Schichtdicken absolut reproduzierbar ist. Diese Reproduzierbarkeit gewährleistet dann den Einsatz für die oben genannte Erfindung.

Figur 2 zeigt im Querschnitt die Position beispielsweise des Standlichtes im unteren Bereich des Scheinwerfergehäuses nämlich Abdeckrahmen. Die davorliegende Glasschicht, d.h. das Scheinwerferglas 2 wird dann in der oben beschriebenen Weise beschichtet, wodurch das besagte Lampenelement dann dahinter versteckt plaziert ist.

Dies führt zum einen zu einem optisch einwandfreien Design, indem von außen nicht in dem Lampenkörper zumindest nicht in die besagten Sektionen hineingesehen werden kann und zum anderen ist aber der Lichtdurchgang von innen nach außen weitestgehend ungehindert.

## Patentansprüche

1. Scheinwerferanordnung für Kraftfahrzeuge, mit mindestens 2 Leuchtmitteln für Fahr-, Abblend- und Standlicht, welche innerhalb eines Scheinwerfergehäuses angeordnet sind, wobei das Scheinwerfergehäuse eine Lichtaustrittsfläche ausweist,
dadurch gekennzeichnet,
daß die Lichtaustrittsfläche (2) sektionsweise derart teildurchlässig beschichtet ist, daß dieselbe in Richtung von außen in das Scheinwerfergehäuse (1) hinein optisch dicht und in umgekehrter Richtung lichtdurchlässig ist, und daß hinter den besagten beschichteten Sektionen (4) die Leuchtmittel (5) oder Teile davon beispielsweise für das Blinklicht angeordnet sind.

2. Scheinwerferanordnung für Kraftfahrzeuge nach Anspruch 1,
dadurch gekennzeichnet,
daß die sektionsweise Beschichtung (4) aus einer außen als Verspiegelung wirkenden Beschichtung besteht.

3. Scheinwerferanordnung für Kraftfahrzeuge nach Anspruch 1 oder 2,
dadurch gekennzeichnet,
daß die sektionsweise Beschichtung (4)eine die Lichtaustrittsfläche innen oder außen aufgesputterte Beschichtung ist.

4. Scheinwerferanordnung für Kraftfahrzeuge nach einem oder mehreren vorhergehenden Ansprüche,
dadurch gekennzeichnet,
daß hinter den beschichteten Sektionen (4) weitere Zusatzleuchten verdeckt angeordnet sind.

5. Scheinwerferanordnung nach Anspruch 4,
dadurch gekennzeichnet,
daß die Zusatzleuchten (5) oder das Standlicht in einem konturierten Rahmenelement (3) der Scheinwerferanordnung bzw. der Abdeckung derselben befestigt ist, welche optisch von der besagten sektionsweisen Beschichtung (4) abgedeckt ist.
